# EUROPEAN PATENT SPECIFICATION

(11) **EP 2 116 746 B1**
(45) Date of publication and mention of the grant of the patent: **14.03.2012**
(21) Application number: 08008566.5
(22) Date of filing: 07.05.2008
(51) Int. Cl.: F16H 63/30, F16H 63/18

(54) **Shift control mechanism**
Schaltungssteuerungsmechanismus
Mécanisme de contrôle de changement de vitesse

(43) Date of publication of application: 11.11.2009
(73) Proprietor: GM Global Technology Operations LLC, Detroit, MI 48265-3000 (US)
(72) Inventor: Englund, Fredrik, 46191 Trollhättan (SE); Mohlin, Michael, B., 442 32 Kungålv (SE); Cyren, Bengt, 47232 Svanesund (SE)
(74) Representative: Kraenzmer, Martin

(56) References cited:
- EP-A- 1 205 692
- DE-A1- 19 809 413
- DE-C- 922 508
- FR-A- 2 878 596
- JP-A- 59 156 828

## Description

The present invention relates to an internal shift control mechanism for a motor vehicle gearbox according to the preamble of claim 1. Such a shift control mechanism is known from FR 2 878 596 A1.

Conventional gearshift controls comprise a shift lever placed in the passenger compartment of a motor vehicle and operated by the driver, which is coupled to a shifter axle inside the gearbox for rotating and axially displacing the shifter axle. The shifter axle carries a plurality of shift arms, one of which is brought into engagement with a shift gate formed on a displaceable carriage by axial displacement of the shifter axle, and which displaces the carriage by rotating. The carriage, in turn, comprises a fork member which engages a synchronizer sleeve on a rotating shaft of the gearbox.

Unbalance of the rotating shaft and of the gearwheels carried by it causes the shaft to vibrate. When a gear is engaged the shift arm of the internal shift control mechanism slightly preloads the fork member against the synchronizer sleeve. This means that there is a mechanical connection through the entire shift control mechanism when a gear is engaged. The vibration of the shaft is thus transmitted from the synchronizer sleeve through the fork member, the shift arm, the shifter axle and finally to the shift lever. This vibration is felt by the driver whenever he operates the shift lever. Further, the vibration of the shift lever and of its support causes noise to be emitted into the passenger compartment. If the vibrations are very strong, there is a risk of gear jump, or the driver may have difficulties in engaging a desired gear, or he may accidentally engage another gear than intended.

In order to avoid these problems, it is desirable to minimize the amount of vibration which is transmitted through the shift control mechanism to the shift lever. A common approach for achieving this goal is to use elastic elements such as rubber sleeves or the like for attenuating the vibrations on their way from the gearbox to the shift lever. The deficiency with this solution is that the elastic elements are effective only if there is a certain play in the control mechanism, which decreases the precision with which the driver can control the shifting movements in the gearbox. Obviously, this increases the likeliness of misshifts, and the soft feel of the shift lever implied by this approach may give the driver an undesirable feeling of uncertainty. Further, aging of the rubber tends to have an influence on the behaviour of the control mechanism. If the rubber becomes brittle with age or breaks, it must be replaced, requiring labour-intensive repairs.

A second common solution for preventing the vibrations from being transmitted to the passenger compartment is to create a mechanical clearance somewhere in the transmission path between the shift lever and the synchronizer sleeve. The deficiency with this solution is that it is not robust and that it is sensitive of tolerances and often requires labour intensive adjustment in production. As soon as the driver displaces the shift lever and removes the mechanical clearance, the vibrations are transmitted and become felt and heard.

The object of the present invention is therefore to provide an internal shift control mechanism for a motor vehicle gearbox which allows to suppress the transmission of vibrations from the gearbox without requiring elastic elements or clearances in the switching force transmission path between the shift lever and the synchronizer sleeve.

This object is achieved according to the invention by providing an internal shift control mechanism for a motor vehicle gearbox as defined in claim 1. At the contact point, only forces perpendicular to the tangent can be transmitted between the shift arm and the shift gate. Any force parallel to the tangent would cause the shift arm and the shift gate to slide with respect to each other, but would not be efficiently transmitted. The force perpendicular to the tangent, however, is parallel to the radius of the contact point, and therefore does not apply torque to the shift axle. Therefore, no vibration of the shift axle is excited, and a vibration of the carriage is not transmitted to the shift arm. Further, since the shift gate cannot transmit torque to the shifter axle, it cannot yield to force applied to it by the synchronizer sleeve, so that a gear jump is reliably prevented.

Preferably, the synchronizer sleeve is displaceable between the first active position and a second active position with the neutral position in between. In a first embodiment of the invention, the angle of rotation of the shift arm between the two active positions is approximately 40°. In a second embodiment, it is 180°.

As will be seen in further detail below, the shift control mechanism can be made compact, and/or an approximately linear relationship between the angle of rotation of the shift arm and the corresponding displacement of the shift gate can be achieved if the outline of the shift arm further comprises a concave arc adjacent to said circular arc.

For the same purpose it is useful if a cutout of the shift gate engaged by the shift arm has an undercut shape.

Specifically, if the cut-out is delimited by two fingers, facing sides of said two fingers preferably have a convex curvature.

In another not claimed embodiment, the shift gate may be a hole formed in the carriage, and the shift arm extends eccentrically through said hole in order to displace the carriage whenever the shift arm is rotated.

In this not claimed embodiment, the contact point may be provided on a flat facet of the shift arm.

In both embodiments, it is preferred that the shifter axle is axially displaceable between a position in which the shift arm engages the shift gate and a position in which a cylindrical portion of the shifter axle engages and immobilizes the shift gate.

In that case, if a plurality of carriages are arranged along the shifter axle for engaging different gears, shift arms can be arranged along the shifter axle at such a spacing that no two shift arms simultaneously engage a shift gate. I.e. if one of the shift arms does engage a shift gate, all other shift gates are blocked by cylindrical portions of the shifter axle engaging them. In this way it is ensured that not more than one synchronizer sleeve can be in an active position at a time, i.e. a simultaneous engagement of two different gears is excluded.

The shift arm preferably comprises a spring member for urging the surface of the shift arm at the contact point in a radially outward direction. By this spring member, dimensional tolerances of the gearbox and the shift control mechanism can be compensated, and it can be ensured that in spite of such tolerances the synchronizer sleeve is safely held in a precisely defined position at an abutment of a dogring of a neighbouring gearwheel by the spring member when the synchronizer sleeve is in an active position.

Further features and advantages of the invention will become apparent from the subsequent description of embodiments thereof referring to the appended drawings.
- Fig. 1: is a schematic view of a carriage and a shift arm controlling it according to a first embodiment of the invention;
- Fig. 2: is a view analogous to that of Fig. 1, of the control mechanism, according to a second embodiment, in a neutral position;
- Fig. 3: is a view of the control mechanism of Fig. 2 in an active position;
- Fig. 4: is a cross section of a shift arm according to the second embodiment;
- Fig. 5: is a perspective view of the shift arm of Fig. 4;
- Fig. 6: illustrates the engagement of a synchronizer sleeve and a dogring of a gearwheel in an active position;
- Fig. 7: is a plan view of an alternative embodiment of a shift arm for the shift control mechanism of Fig. 2 and 3;
- Fig. 8: shows the shift arm of Fig. 7 in its neutral position;
- Fig. 9: shows the shift arm of Fig. 7 in an intermediate position;
- Fig. 10: shows the shift arm of Fig. 7 in its active position;
- Fig. 11: illustrates a shift control mechanism according to a third not claimed embodiment of the invention, in neutral position;
- Fig. 12: illustrates the shift control mechanism of Fig. 8 in an active position;
- Fig. 13: is a view analogous to Fig. 9, according to a fourth not claimed embodiment of the invention; and
- Fig. 14: is a view of a transmission mechanism between the shift lever and the shift axle according to the third and fourth the embodiments.

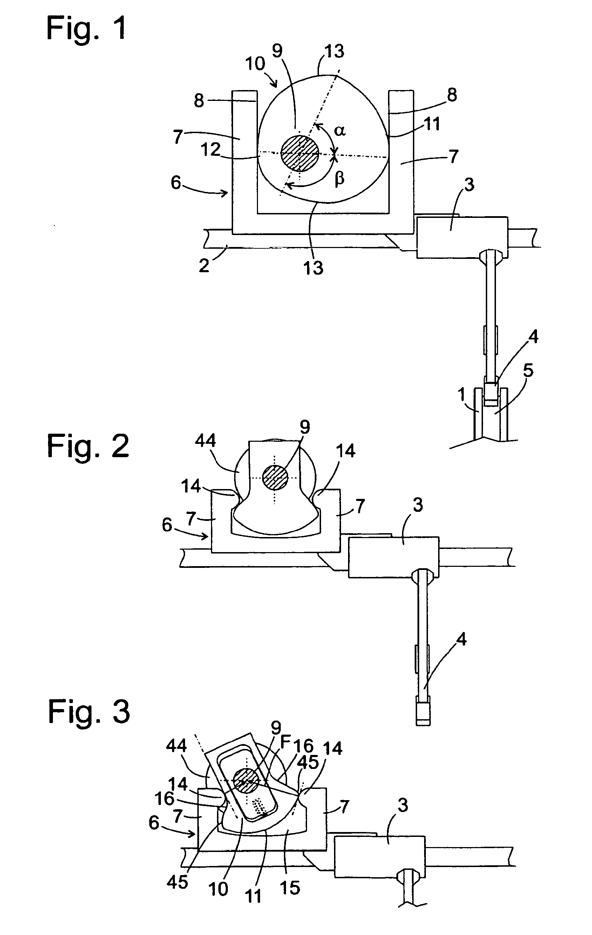

In Fig. 1, reference numeral 1 denotes a synchronizer sleeve or synchronizer ring, which is locked in rotation to a shaft, not shown, of a motor vehicle gearbox by a synchronizer hub. At either side of the hub, gearwheels may be rotatably mounted on the shaft, each gearwheel having a dogring which faces the synchronizer sleeve 1 and which can be brought into locking engagement with the shaft if the synchronizer sleeve 1 is displaced towards it and engages it. Since all these components and other components of a conventional synchronizer are known to the man of the art, they need not be described in more detail here and are not shown in the drawing.

The synchronizer sleeve 1 rotates along with the shaft around an axis which is parallel to the plane of the drawing.

A rod 2 or any other appropriate kind of guiding rail extends parallel to the rotating shaft of the gearbox and displaceably supports a carriage 3. The carriage comprises a fork 4 which engages a circumferential groove 5 of the synchronizer sleeve 1. The carriage 3 further comprises a U-shaped shift gate 6. The shift gate 6 has two fingers 7 with mutually parallel surfaces 8 facing each other. A shift axle 9 is rotatable around an axis extending perpendicular to the plane of the drawing and carries a shift arm 10 shaped as an eccentric disk. The circumference of the shift arm 10 can be divided into four sections, two circular sections 11, 12 of different radii, each spanning an angle α, the centre of which coincides with the axis of rotation of shift axle 9, and two sections 13, shaped as Archimedean spirals of opposite slope, each spanning an angle β=180°-α. In the drawing, α≈60°, but this it might as well take other values.

In the configuration shown in Fig. 1, the circular sections 11, 12 are in contact with the surfaces 8 of fingers 7. As long as this is so, the carriage 3 will not be displaced by a rotation of the shift axle 9. When the shift arm 10 is rotated further, its two spiral sections 13 come into contact with the two surfaces 8, the carriage 3 is moved, and its displacement is directly proportional to the rotation angle. Since both fingers 7 are in contact with the shift arm 10 regardless of its orientation, the displacement of the carriage is controlled strictly and without play. In the configuration shown in Fig. 1, the carriage 3 is at its maximum displacement towards the right, and the synchronizer sleeve 1 is in a first active position engaging a gearwheel at its right-hand side. If the shift axle 9 is rotated by slightly more than β, counter-clockwise, the carriage 3 is at its maximum displacement towards the left and engages a gearwheel at its left hand side. In between, at an angle of rotation of approx. ½β, the synchronizer sleeve 1 is in a neutral position, engaging neither of the two gearwheels.

If the carriage is excited to vibrate by the rotating shaft, this vibration may be regarded as a combination of horizontal and vertical vibrations. A vertical vibration of fingers 7 cannot efficiently excite a vibration of the shift arm 10, since in the vertical direction the fingers 7 are free to vibrate with respect to shift arm 10. A horizontal vibration may cause a horizontal force to be applied to shift arm 10, but since the point of contact between shift arm 10 and fingers 7 is in the same horizontal plane as the axis of shift axle 9, i.e. the radius extending between the point of contact and the axis is perpendicular to the surfaces that touch each other, no torque is applied to the shift arm 10. Thus no vibration is transferred from the carriage 3 to the shift axle 9, and there is no risk of the shift axle being rotated by the fingers 7, so that once it is engaged, a gear is reliably locked.

Fig. 2 and 3 illustrate a shift control mechanism according to a second embodiment of the invention, which is preferred over that of Fig. 1 because the same stroke of the carriage 3 as in the embodiment of Fig. 1 is achieved at considerably smaller dimensions of the shift arm 10 and the shift gate 6. In this embodiment, the two fingers 7 of the shift gate 6 have semi-circular projections 14 facing each other, giving the cutout 15 between the two fingers 7 an undercut shape. The shift arm 10 engaging this cutout 15 has a circular circumference section 11 and S-shaped sections 16, 45 at both sides of the circular section 11. Each S-shaped section has a concave section 16 and, between said concave section 16 and the circular section 11, a convex section 45 with a smaller radius of curvature than the circular section 11.

In the configuration of Fig. 2, the carriage 3 is in a neutral position. Both projections 14 are in contact with the S-shaped sections 16, 45 of shift arm 10. The shape of these sections 16, 45 is adapted to the semi-circular shape of the projections 14 so that when the shift axle 9 is rotated, the point of contact between a pushing side of the shift arm 10 (the right-hand side in case of a counter-clockwise rotation) and its associated projection 14 will move along their respective circumferences, while a minute gap may exist between the other side of the shift arm and its associated projection 14. In this way, by rotating the shift axle 9, the driver has strict and essentially play-free control of the position of carriage 3.

When the shift arm 10 is rotated far enough from its position shown in Fig. 2, one of the two points of contact will finally move off the concave section 16 and will reach the circular section 11. In the configuration of Fig. 3, the right hand projection 14 is in contact with the circular section 11. A tangent to the contacting surfaces at the point of contact between circular section 11 and projection 14 of the right-hand finger 7 is represented by a dash-dot line in Fig. 3. At the point of contact, only a force vector F which is perpendicular to the tangent can be transmitted from the vibrating carriage 3 to the shift arm 10. This force vector, however, exercises no torque on shift arm 10, and therefore excites no vibration in it. At the left hand side of the shift arm, there will usually be not contact with the left-hand finger 7. If there is a contact, between the left-hand finger 7 and the facing concave section 16, the tangent is perpendicular to the radius of the point of contact, too, and no torque is transmitted. Accordingly, the vibration of the carriage 3 is not transmitted along shift axle 9 to the shift lever.

It is readily apparent that when designing the shift arm 10 of Fig. 2 and 3, there is a certain discretion as to the angular width of the circular section 11. The wider this circular section 11 is, the smaller is the angle by which the shift arm 10 must be rotated in order to displace the carriage 3 from its neutral position to an active position or from one active position to the other. Preferably, the angle of rotation between the two active positions should be approximately 40°, since conventional shift control mechanisms have rotation angles in this range, so that a commercially available shift lever and transmission mechanism between the shift lever and the shift axle 9 may be used in the present invention.

Typically, a gearbox has several synchronizer sleeves which are controlled by the same shift axle via an associated carriage. To this end, there are several shift arms mounted on the same shift axle 9, sandwiched between cylindrical bodies 44, the diameter of which is chosen so as to fit in the shift gate 6 while the shift axle 9 is in the orientation of Fig. 2. In this orientation, by axially displacing the shift axle 9, the shift arm 10 is moved out of the shift gate, and instead one of the cylindrical bodies 44 is moved in, and shift arm 10 or another shift arm is moved into the shift gate of another carriage. Now a rotation of shift axle 9 will displace this other carriage and its associated synchronizer sleeve, while the carriage 3 of Fig. 3 is blocked by the cylindrical body 44. In the configuration of Fig. 3, no axial displacement of shift axle 9 is possible since the left-hand finger 7 is engaged between two cylindrical bodies 44.

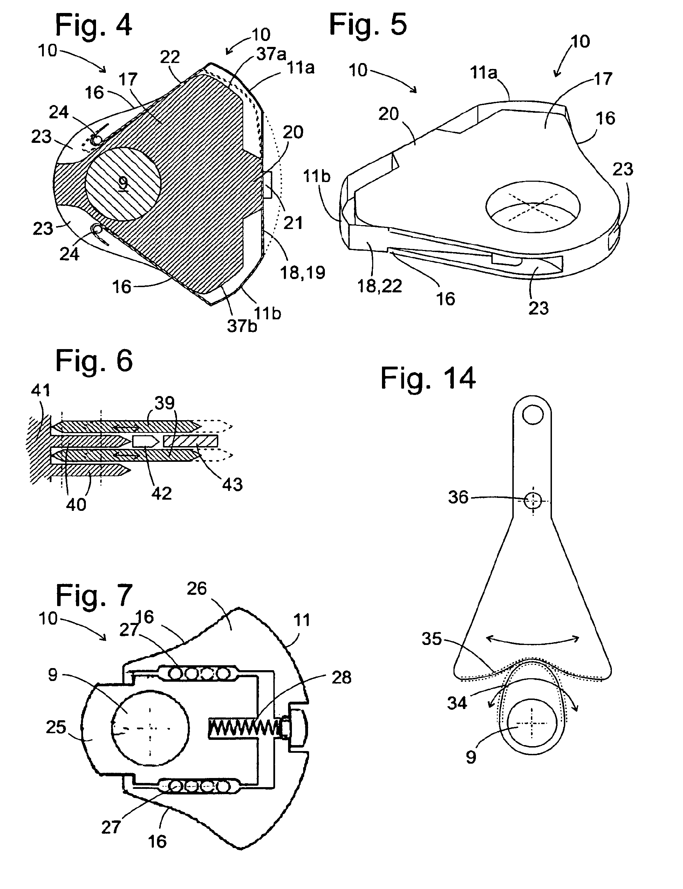

Fig. 4 and Fig. 5 illustrate a cross section and a perspective view of a shift arm 10 according to a preferred embodiment. In this embodiment, the shift arm 10 is not all rigid, but comprises a rigid core 17, which is fixed to the shift axle 9, and a leaf spring 18, which forms the circular section 11 of the circumference of the shift arm 10. Precisely speaking, the leaf spring 18 has two circular sections 11a, 11b and a straight section 19 connecting the two. The fact that the circular section is not continuous but interrupted by straight section 19 has no influence on the operation of the shift arm 10 since the straight section 19 never faces one of the projections 14. Behind the circular sections 11a b of leaf spring, there are circular outline sections 37a, 37b of core 17. The straight section 19 has its centre supported by a projection 20 of core 17 and is fixed to this projection 20 by a screw 21. Behind the circular sections 11a, b of leaf spring, there are circular outline sections 37a, 37b of core 17.

At the outer edges of the circular sections 11a, 11b, there is a sharp bend and beyond that, lateral sections 22 of the leaf spring 18 define part of the concave sections 16 of the circumference of the shift arm 10. As can be seen in Fig. 5, end portions of the leaf spring 18 engage grooves 23 of core 17 and are bent in a hairpin-like fashion around two pins 24.

The leaf spring 18 and the outline of the core 17 at both sides of projection 20 are designed so that when the shift arm 10 is in an active position, in which one of circular spring sections 11a, 11b is in contact with a projection 14 and a gear is engaged, this circular section 11a or 11b is deflected towards the associated circular outline section 37a or 37b, as shown in a dashed outline in Fig. 4, so that a resilient force of the deflected spring presses synchronizer sleeve 1 into engagement with a dogring of a gearwheel.

Fig. 6 schematically illustrates such an engagement state. Teeth 39 of synchronizer sleeve 1 overlap with dogring teeth 40 of a gearwheel 41, with teeth 42 of a baulk ring and with teeth 43 of a synchronizer hub, so that torque can be transmitted between the gearwheel 41 and the shaft carrying it. The resilient force of the spring 18 urges the teeth 39 into abutment against the gearwheel 41 body. The synchronizer sleeve 1 is free to move against the force of spring 18 to a position shown in dashed outline in Fig. 6. In this limiting position the spring 18 abuts against its associated circular outline section 37a or 37b and cannot recede further. The exact location of this limiting position may vary from one gearbox to another due to tolerances of manufacture and mounting of the gearbox and the control mechanism, but by keeping the overlap between teeth 39 and 40 long enough, gear jumping can be reliably prevented.

Fig. 7 is a cross section of another embodiment of shift arm 10. In this embodiment, the shift arm 10 comprises two rigid elements, a core element 25 which is solidly mounted on the shift axle 9, and an outer element 26 which comprises the circular, convex and concave sections 11, 45, 16 of the circumference of the shift arm 10 and which is radially displaceable along a symmetry plane with respect to the core element 25. In the drawing of Fig. 7, the linear displacement of the outer element 26 is guided by linear ball bearings 27, but in a simplified embodiment these ball bearings might be replaced by simple guiding rails. A helical spring 28 in a cavity between the elements 25, 26 urges the circular section 11 away from shift axle 9. Similar to what was described referring to Fig. 4 and 5, the helical spring 28 is compressed when the carriage 3 is in an active position in which synchronizer sleeve 1 engages a dogring of an associated gearwheel and, by relaxing, urges the synchronizer sleeve 1 into an abutment position at the dogring.

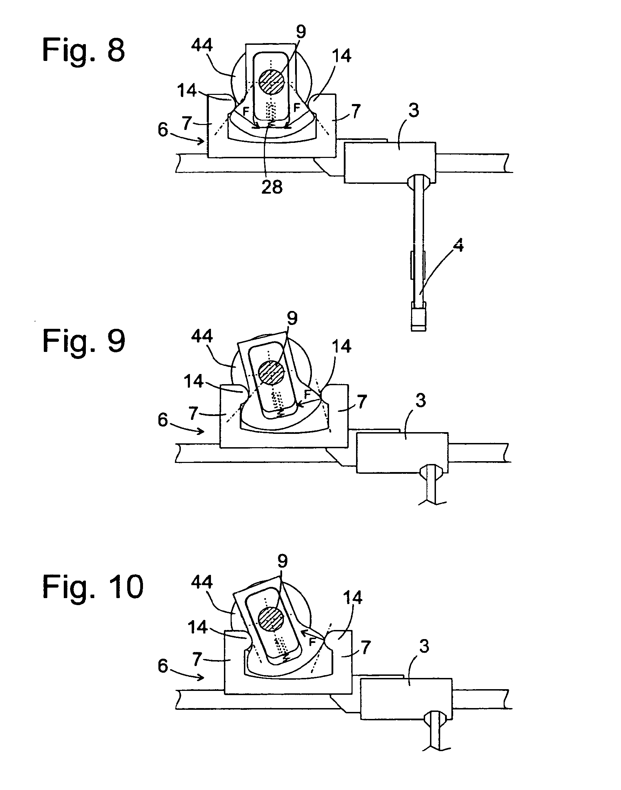

The operation of the spring-loaded shift arms of Fig. 4, 5 and 7 is illustrated in detail in Fig. 8 to 10. Although in these Figs. only the shift arm of Fig. 7 is shown, a skilled reader will recognize that the shift arm of Fig. 4 and 5 can be operated just in the same way:

Fig. 8 is the neutral position. Spring 28 is expanded as far as the shapes of core element 25 and outer element 26 allow. Both projections 14 are in contact with the outer element 26, and the tangents at the points of contact are directed so that only downward forces F can be applied to the outer element so that it can not slide relative to the core element 25.

In Fig. 9, the shift arm has rotated out of the neutral position by a small angle. The point of contact between the shift arm and the right-hand projection 14 has moved along the peripheries of the outer element 26 and the projection 14 and the tangent has become parallel to the sliding direction of the outer element 26. The left-hand projection 14, although not necessarily in direct contact with the shift arm, is still blocking a displacement of the outer element 26.

When the final position is reached as shown in Fig. 10, after a rotation of approx. 20° from the neutral position, the tangent has rotated so far that the transmitted force F has a component in the sliding direction of the outer element 26 that will drive a sliding movement of the outer element 26. While the shift arm 10 has been behaving like a rigid body, allowing a precise control of the shifting movement, during most of its rotation, it thus becomes resilient when the synchronizer sleeve 1 is engaging its associated dogring. Vibrations of the carriage 3 can thus be absorbed by spring 28 while the gear is engaged. The amount of radial force to which the shift axle 6 is subject is therefore much smaller than in case of a shift arm which is rigidly mounted on the shift axle 6.

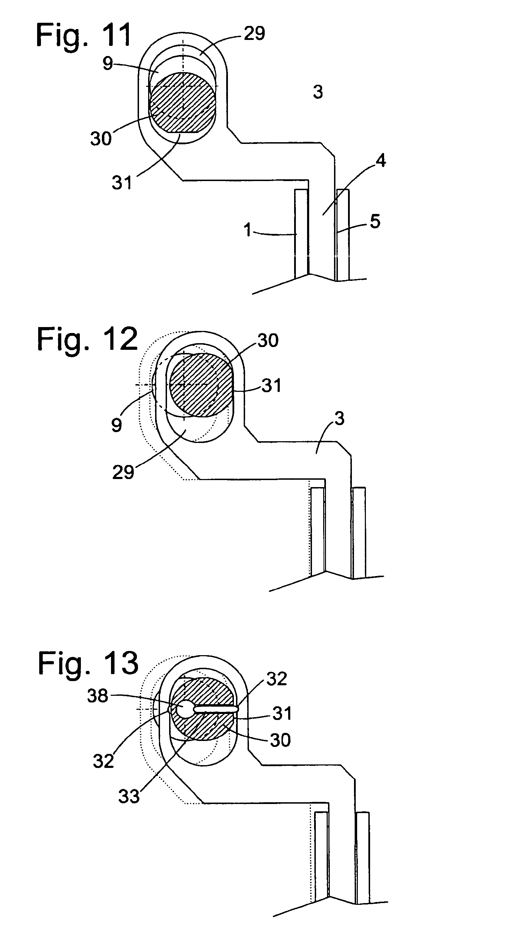

A third embodiment of the invention will be described referring to Fig. 11 and 12, which illustrate the third embodiment in neutral and active positions in analogy to Fig. 2 and 3. In this third embodiment, the shift axle 9 is a generally cylindrical rod extending perpendicular to the plane of the drawings, in which some sections of the rod are radially offset similar to the camshaft of a combustion engine. The shift axle 9 extends through a slightly elongated hole 29 of carriage 3. As in the previous embodiments, the carriage 3 comprises a fork 4 engaging a circumferential groove 5 of a synchronizer sleeve 1.

In Fig. 11, eccentric portion 30 is offset with respect to the axis of shift axle 9 in the direction perpendicular to the displacement direction of synchronizer sleeve 1, and synchronizer sleeve 1 is in a neutral position. If the shift axle 9 is rotated counter-clockwise by 90°, as shown in Fig. 12, carriage 3 is displaced to the right and reaches an active position. The hole 29 has parallel facing sides which extend perpendicular to the displacement direction of synchronizer sleeve 1, i.e. to the axis of the shaft carrying sleeve 1. The eccentric portion 30 has a flat facet 31 which in the configuration of Fig. 12 is in contact with one of the facing surfaces of hole 29. Here, too, the plane of contact between the facet 31 and the side surface of hole 29 comprises a point whose radius, with respect to the axis of shift axle 9, is perpendicular to the plane of contact, so that any force applied to the shift axle 9 by the carriage 3 produces no torque. Accordingly, no vibration of the shift axle 9 is excited.

Fig. 13 is a schematic view, analogous to that of Fig. 12, of a fourth embodiment of the invention. In this embodiment, the carriage 3 is identical to that of Fig. 11 and 12, except for two small notches 32 formed in the facing surfaces of hole 29, and a spring-loaded pin 33 which is displaceable in a radial bore of eccentric portion 30. Similar to the leaf spring 18 in fig. 4 and 5 or the helical spring 28 in Fig. 7, the pin 33 is effective to compensate tolerances of the transmission and the control mechanism and to urge the synchronizer sleeve 1 forward into an abutting position at an associated dogring. A spring acting on the pin 33 may be located in an axial bore 38 of shift axle 9.

Fig. 14 schematically illustrates a transmission mechanism for driving a 180° rotation of shift axle 9 between two active positions as required in the embodiments of Fig. 11 to 13. Shift axle 9 carries a gear 34 of ovoid cross section, which meshes with a rack 35 of swallowtail shape, which is rotatable about a fulcrum 36 by operation of the gear shift lever. The configuration of gear 34 and rack 35 shown in Fig. 14 corresponds to the neutral position of synchronizer sleeve 1. When the rack 35 is rotated away from the neutral position of Fig. 14, its effective radius increases, whereas that of gear 34 decreases. In this way an approximately linear relationship between the angle of rotation of the rack 35 and the displacement of synchronizer sleeve 1 can be maintained over a large portion of the stroke of the latter. Near the end of the stroke, the ratio between displacement and rotation angle inevitably decreases, but this is quite desirable since it allows to apply a high load to the synchronizer sleeve 1 in synchronization and engaging phases of the gear switching process.

### List of reference signs

- 1: synchronizer sleeve
- 2: rod
- 3: carriage
- 4: fork
- 5: groove
- 6: shift gate
- 7: finger
- 8: surface
- 9: shift axle
- 10: ahift arm
- 11: circular section gr.
- 12: circular section kl.
- 13: spiral section
- 14: projection
- 15: cutout
- 16: concave section
- 17: core
- 18: leaf spring
- 19: straight section
- 20: projection
- 21: screw
- 22: lateral section
- 23: grooves
- 24: pin
- 25: core element
- 26: outer element
- 27: ball bearing
- 28: helical spring
- 29: hole
- 30: concentric portion
- 31: flat facet
- 32: notch
- 33: pin
- 34: gear
- 35: rack
- 36: fulcrum
- 37: circular outline section
- 38: axial bore
- 39: tooth
- 40: tooth
- 41: gearwheel
- 42: tooth
- 43: tooth
- 44: cylindrical body
- 45: convex section

## Claims

1. An internal shift control mechanism for a motor vehicle gearbox, comprising
- a fork member (4) for engaging and displacing a synchronizer sleeve (1) of the gearbox in an axial direction between a neutral position and at least one active position;
- a carriage (3) supporting the fork member (4), displaceably guided in the axial direction;
- a shifter axle (9) having an axis of rotation which extends transversally with respect to the displacement direction of the carriage (3) and carrying a shift arm (10) which engages a shift gate (6; 29) formed on said carriage (3), the outline of the shift arm (10) comprising a circular arc (11, 12; 11a, 11b; 37a, 37b) centred upon the shifter axle (9);
wherein in the active position a tangent at a contact point between the shift arm (10) and the shift gate (6;) is perpendicular to a radius extending from the axis to the contact point, **characterized in that** said contact point is a point on said circular arc (11, 12; 11a, 11b; 37a, 37b).

2. The internal shift control mechanism of claim 1, wherein the synchronizer sleeve (1) is displaceable between the first active position and a second active position via the neutral position.

3. The internal shift control mechanism of claim 1 or 2, wherein the outline of the shift arm (10) further comprises a concave arc (16) adjacent to said circular arc (11a, 11b).

4. The internal shift control mechanism of any of the preceding claims, wherein a cutout (15) of the shift gate (6) engaged by the shift arm (10) has an undercut shape.

5. The internal shift control mechanism of claim 4, wherein the cutout is delimited by two fingers (7), and wherein facing sides (8) of said two fingers have a convex curvature (14).

6. The internal shift control mechanism of any of the preceding claims, wherein the shifter axle (9) is axially displaceable between a position in which the shift arm (10) engages the shift gate (6) and a position in which a cylindrical portion of the shifter axle engages and immobilizes the shift gate (6).

7. The internal shift control mechanism of claim 6, wherein a plurality of carriages (3) are arranged along the shifter axle (9) and shift arms (10) are arranged along the shifter axle (9) so that no two shift arms (10) simultaneously engage a shift gate (6).

8. The internal shift control mechanism of any of the preceding claims, wherein the shift arm (10) comprises a spring member (18; 28) for urging the surface of the shift arm (10) at said contact point in a radially outward direction.

9. The internal shift control mechanism of claim 8, wherein the active position is a locking range of the synchronizer sleeve (1), and the spring member (18; 28) is effective to urge the synchronizer against an abutment (41) at an end of the locking range.

## Patentansprüche

1. Interner Schaltungssteuerungsmechanismus für ein Kraftfahrzeuggetriebe, umfassend
- ein Gabelelement (4), das in Eingriff mit einer Synchronisiermuffe (1) des Getriebes gelangt und diese in axialer Richtung zwischen einer neutralen Stellung und mindestens einer aktiven Stellung verschiebt;
- einen Schlitten (3), der das Gabelelement (4) trägt und in axialer Richtung verschiebbar geführt wird;
- eine Schaltachse (9), die eine Drehachse aufweist, die sich quer in Bezug auf die Bewegungsrichtung des Schlittens (3) erstreckt und einen Schaltarm (10) trägt, der in eine Schaltkulisse (6; 29) eingreift, die an dem Schlitten (3) gebildet ist, wobei der Umriss des Schaltarms (10) einen Kreisbogen (11, 12; 11a, 11b; 37a, 37b) umfasst, der auf die Schaltachse (9) zentriert ist;
wobei in der aktiven Stellung eine Tangenge an einem Kontaktpunkt zwischen dem Schaltarm (10) und der Schaltkulisse (6) senkrecht zu einem Radius ist, der sich von der Achse zu dem Kontaktpunkt erstreckt, **dadurch gekennzeichnet, dass** der Kontaktpunkt ein Punkt auf dem Kreisbogen (11, 12; 11a, 11b; 37a, 37b) ist.

2. Interner Schaltungssteuerungsmechanismus nach Anspruch 1, wobei die Synchronisiermuffe (1) zwischen der ersten aktiven Stellung und einer zweiten aktiven Stellung über die neutrale Stellung verschiebbar ist.

3. Interner Schaltungssteuerungsmechanismus nach Anspruch 1 oder 2, wobei der Umriss des Schaltarms (10) ferner einen konkaven Bogen (16) umfasst, der an den Kreisbogen (11a, 11b) angrenzt.

4. Interner Schaltungssteuerungsmechanismus nach einem der vorhergehenden Ansprüche, wobei ein Ausschnitt (15) der Schaltkulisse (6), in den der Schaltarm (10) eingreift, eine Fußfreischnittform aufweist.

5. Interner Schaltungssteuerungsmechanismus nach Anspruch 4, wobei der Ausschnitt durch zwei Finger (7) begrenzt wird und wobei einander zugewandte Seiten (8) der zwei Finger eine konvexe Krümmung (14) aufweisen.

6. Interner Schaltungssteuerungsmechanismus nach einem der vorhergehenden Ansprüche, wobei die Schaltachse (9) zwischen einer Stellung, in welcher der Schaltarm (10) in die Schaltkulisse (6) eingreift, und einer Stellung, in der ein zylindrischer Teil der Schaltachse in die Schaltkulisse (6) eingreift und diese immobilisiert, axial verschiebbar ist.

7. Interner Schaltungssteuerungsmechanismus nach Anspruch 6, wobei eine Vielzahl von Schlitten (3) entlang der Schaltachse (9) angeordnet sind und Schaltarme (10) entlang der Schaltachse (9) derart angeordnet sind, dass zwei Schaltarme (10) nicht gleichzeitig in eine Schaltkulisse (6) eingreifen.

8. Interner Schaltungssteuerungsmechanismus nach einem der vorhergehenden Ansprüche, wobei der Schaltarm (10) ein Federelement (18; 28) umfasst, um die Oberfläche des Schaltarms (10) am Kontaktpunkt in eine radial nach außen zeigende Richtung zu zwingen.

9. Interner Schaltungssteuerungsmechanismus nach Anspruch 8, wobei die aktive Stellung ein Verriegelungsbereich der Synchronisiermuffe (1) ist und das Federelement (18; 28) dazu dient, die Synchronisiereinrichtung gegen einen Anschlag (41) an einem Ende des Verriegelungsbereichs zu zwingen.

## Revendications

1. Un mécanisme de contrôle de changement de vitesse interne pour une boîte de vitesse d'un véhicule à moteur, comprenant
- une fourchette (4) pour engager et déplacer un manchon baladeur (1) de la boîte de vitesse dans un sens axial entre une position neutre et au moins une position active ;
- un chariot (3) soutenant la fourchette (4), guidé, de façon à se déplacer, dans le sens axial ;
- un axe de changement de vitesse (9) ayant un axe de rotation qui s'étend de façon transversale par rapport au sens de déplacement du chariot (3) et portant un bras de changement de vitesse (10) qui engage un secteur de changement de vitesse (6 ; 29) formé sur ledit chariot (3), le profil du bras de changement de vitesse (10) comprenant un arc circulaire (11 ; 12 ; 11a ; 37a ; 37b) centré sur l'axe de changement de vitesse (9);
où dans la position active, une tangente à un point de contact entre le bras de changement de vitesse (10) et le secteur de changement de vitesse (6) est perpendiculaire à un rayon s'étendant de l'axe au point de contact, **caractérisé en ce que** ledit point de contact est un point sur ledit arc circulaire (11 ; 12 ; 11a ; 37a ; 37b).

2. Le mécanisme de contrôle de changement de vitesse interne de la revendication 1, où le manchon baladeur (1) est déplaçable entre la première position active et une deuxième position active via la position neutre.

3. Le mécanisme de contrôle de changement de vitesse interne de la revendication 1 ou 2, où le profil du bras de changement de vitesse (10) comprend également un arc concave (16) adjacent au dit arc circulaire (11a, 11b).

4. Le mécanisme de contrôle de changement de vitesse interne de n'importe laquelle des revendications précédentes où un coupe-circuit (15) du secteur du changement de vitesse (6) engagé par le bras de changement de vitesse (10) possède une forme d'encoche.

5. Le mécanisme de contrôle de changement de vitesse interne de la revendication 4, où le coupe-circuit est délimité par deux doigts (7), et où les côtés se faisant face (8) desdits deux doigts ont une courbure convexe (14).

6. Le mécanisme de contrôle de changement de vitesse interne de n'importe laquelle des revendications précédentes, où l'axe de changement de vitesse (9) est déplaçable de façon axiale entre une position dans laquelle le bras de changement de vitesse (10) engage le secteur du changement de vitesse (6) et une position dans laquelle une portion cylindrique de l'axe de changement de vitesse engage et immobilise le secteur du changement de vitesse (6).

7. Le mécanisme de contrôle de changement de vitesse interne de la revendication 6, où une pluralité de chariots (3) est disposée le long de l'axe de changement de vitesse (9) et des bras de changement de vitesse (10) sont disposés le long de l'axe de changement de vitesse (9) de sorte qu'aucun des deux bras (10) n'engage simultanément un secteur du changement de vitesse (6).

8. Le mécanisme de contrôle de changement de vitesse interne de n'importe laquelle des revendications précédentes, où le bras de changement de vitesse (10) comprend une pièce à ressort (18 ; 28) pour pousser en avant la surface du bras de changement de vitesse (10) au dit point de contact dans une direction radialement extérieure.

9. Le mécanisme de contrôle de changement de vitesse interne de la revendication 8, où la position active est une plage de verrouillage du manchon baladeur (1), et le ressort (18 ; 28) est effectif pour pousser en avant le manchon contre une butée (41) à un bout de la plage de verrouillage.
